# NOUVEAU FASCICULE DE BREVET EUROPEEN

(11) **EP 2 403 719 B2**
(45) Date de publication et mention de la décision concernant l'opposition: **15.02.2023**
(45) Mention de la délivrance du brevet: 27.04.2016
(21) Numéro de dépôt: 10709889.9
(22) Date de dépôt: 19.02.2010
(51) Int. Cl.: B41M 3/14, B41N 1/06, D21H 21/40, D21H 27/02

(54) **ELEMENT DE SECURITE POUR DOCUMENT-VALEUR**
SICHERHEITSELEMENT FÜR WERTDOKUMENT
SECURITY ELEMENT FOR VALUABLE DOCUMENT

(30) Priorité: 04.03.2009 FR 0951376
(43) Date de publication de la demande: 11.01.2012
(73) Titulaire: Oberthur Fiduciaire SAS, 75008 Paris (FR)
(72) Inventeur: BORDE, Xavier, F-35410 Osse (FR); CESBRON, Thierry, F-35700 Rennes (FR); GILLOT, Julien, F-35135 CHANTEPIE (FR)
(74) Mandataire: Regimbeau
(86) Numéro de dépôt international: PCT/FR2010/050286
(87) Numéro de publication internationale: WO 2010/100360

(56) Documents cités:
- EP-A- 0 640 493
- EP-A- 1 393 925
- EP-A- 1 580 020
- EP-B1- 0 157 921
- WO-A1-00/20225
- WO-A1-97/19821
- WO-A1-97/48555
- WO-A1-98/53999
- WO-A1-02/091041
- WO-A1-03/055691
- WO-A1-2004/048119
- WO-A2-03/107042
- JP-A- 2003 039 892
- US-A- 3 887 742
- US-A- 4 184 700
- US-A- 4 715 623
- US-A- 5 105 306
- "GRAINE" In: RICHARD ERNST: "Wörterbuch der industriellen Technik", ISBN: 978-3-87097-137-3 vol. IV, page 587,

## Description

La présente invention concerne le domaine technique des éléments de sécurité pour document-valeur. Elle s'applique plus particulièrement mais non spécifiquement à l'impression d'un élément de sécurité pour un tel document-valeur tel que par exemple un document fiduciaire ou assimilé.

Par « document fiduciaire », on entend au sens de l'invention tous les documents tels que billets de banque, chèques, cartes bancaires, servant à transmettre une somme d'argent.

Par « document assimilé », on entend tous les documents émis par une administration de l'Etat pour attester de l'identité d'une personne, de ses droits à conduire un véhicule, tels que notamment la carte d'identité, le passeport, le permis de conduire, etc. Par cette expression, on entend également tout document servant à authentifier un objet de valeur tel que par exemple une étiquette apposée sur un vêtement de luxe. On entend également tout document servant à authentifier le paiement d'une taxe comme les vignettes fiscales.

Dans le domaine des documents-valeurs, en particulier des billets de banque, il est connu d'y apposer un ou plusieurs éléments de sécurité de nature variée afin de protéger ces documents de la contrefaçon.

Il existe différents types d'éléments de sécurité, dont notamment les éléments de sécurité dits « de premier niveau ».

Un tel élément de sécurité est difficile à réaliser tout en étant aisément identifiable par un public quelconque lors d'une simple observation attentive.

Cet élément de sécurité présente souvent une conception graphique relativement complexe telle qu'une impression au trait, des guilloches, un fond numismatique et met en oeuvre des techniques d'impression diverses telles que l'offset, la sérigraphie, la taille-douce, la flexographie, la typographie, etc.

Il résulte de la combinaison de ces techniques d'impression et de ces conceptions graphiques complexes un élément de sécurité présentant des finesses de stylisme, des imbrications de motifs ainsi que des combinaisons d'effets très difficiles à reproduire avec du matériel de reprographie grand public (scanner, imprimantes laser ou à jet d'encre couleur, etc.) et/ou du matériel standard d'imprimerie.

Parmi les sécurités de premier niveau, on connaît déjà dans l'état de la technique, notamment du document EP 1 384 595, un élément de sécurité comprenant une image latente réalisée selon une première technique.

Dans ce document, selon cette première technique, l'élément de sécurité est réalisé par un procédé d'impression en relief. L'élément de sécurité comprend un premier réseau de lignes s'étendant suivant une orientation prédéfinie et un second réseau de lignes s'étendant suivant une autre orientation, par exemple perpendiculaire, formant ainsi une brisure nette entre les deux réseaux. Par exemple, le second réseau forme un motif de l'image latente pouvant comprendre une information et le premier réseau forme le fond de l'image latente.

Le motif de l'image latente n'apparaît pas en observation orthogonale au plan de l'élément de sécurité mais apparaît sous un certain angle d'observation prédéfini, notamment en observation rasante. Le relief de l'élément de sécurité peut éventuellement être recouvert d'une encre. En outre, plusieurs images latentes peuvent être imbriquées selon cette première technique.

On connaît également dans l'état de la technique, notamment du document EP 1 580 020, un élément de sécurité comprenant une image latente réalisée selon une deuxième technique.

Dans ce document, l'élément de sécurité comprend deux zones distinctes comprenant chacune un ensemble de sillons, chaque sillon comprenant une pente forte et une pente faible. La première zone forme par exemple le fond de l'image latente alors que la deuxième zone forme un motif caché dans le fond lorsque l'élément de sécurité est observé selon une direction normale au plan de ce dernier.

Les pentes faibles des sillons du premier ensemble sont orientées selon une première même direction alors que les pentes faibles des sillons du deuxième ensemble sont orientées selon une deuxième même direction opposée à la première direction.

Ainsi, exposé à une source lumineuse, l'élément de sécurité réfléchit un faisceau lumineux selon deux directions privilégiées différentes dépendant de l'inclinaison des pentes, de sorte qu'un contraste apparaît entre les deux zones, sous un angle d'observation prédéfini, découvrant le motif caché.

L'inconvénient de ces techniques est qu'il est nécessaire d'incliner fortement le document-valeur pour obtenir un contraste suffisant entre les deux zones et ainsi découvrir l'image latente. Le motif doit en outre présenter un graphisme d'une relative simplicité pour apparaître de façon lisible en observation rasante.

Un état de la technique supplémentaire est constitué par les documents EP 1393925 et JP 2003039892.

L'invention a notamment pour but de proposer un élément de sécurité de premier niveau identifiable sous n'importe quel angle d'observation tout en permettant la formation de motifs complexes.

A cet effet, l'invention a pour objet un élément de sécurité pour un document-valeur, comprenant un réseau de lignes en relief, chaque ligne comprenant au moins un flanc définissant un angle d'inclinaison par rapport à une direction normale au réseau, **caractérisé en ce que** l'angle d'inclinaison du flanc d'au moins une ligne du réseau varie graduellement le long de cette ligne de manière à former en réflexion lumineuse un effet optique dégradé changeant en fonction d'un angle d'observation de l'élément de sécurité.

Grâce à l'invention, du fait de la variation de l'angle d'inclinaison le long de la ligne, la lumière est réfléchie selon plusieurs directions privilégiées par le flanc de la ligne et la répartition de l'intensité lumineuse réfléchie sur le réseau de lignes produit l'effet optique dégradé changeant en fonction de l'angle d'observation. Cet élément offre en outre un relief tactile.

Ainsi, par un simple mouvement d'inclinaison de la feuille de faible amplitude par rapport à une direction normale au support du document, une succession de contrastes du plus clair au plus sombre, correspondant chacun à une répartition lumineuse différente, se propage de proche en proche, générant un effet dynamique immédiatement détectable. Par ailleurs, des motifs complexes sont formés dans le réseau grâce à la diversité des nuances pouvant être intégrées par la variation de l'inclinaison des flancs des lignes. L'image qui en résulte permet d'obtenir des effets supplémentaires par rapport à l'art antérieur et produit notamment un effet dynamique aisément détectable.

Par effet optique dégradé, on entend une transition progressive, graduelle d'une nuance claire à une nuance plus sombre. Bien entendu, des zones de transitions abruptes peuvent être intercalées entre les zones de transitions progressives sans que cela ne sorte du cadre de l'invention.

De préférence, les réseaux sont formés de lignes continues présentant un faible espacement et de préférence contigües. Ces lignes sont en outre préférentiellement parallèles ou quasi-parallèles rectilignes (verticales, horizontales ou obliques).

Dans une variante, une ligne peut être en zigzag, formée par une pluralité de segments plus ou moins longs, chaque segment présentant un angle différent avec ceux auxquels il est directement rattaché.

Dans une autre variante, les lignes peuvent être également curvilignes, circulaires ou en spirale sur au moins une partie des lignes.

Grâce à ces différentes formes possibles de lignes, les motifs peuvent être plus ou moins complexes.

Plus généralement, les lignes peuvent être quelconques avec des sinuosités douces ou anguleuses de formes ouvertes ou fermées, concaves ou convexes.

Les largeurs de lignes sont de préférence constantes et égales entre elles. En variante, elles peuvent être différentes et/ou évoluer de manière graduelle ou abrupte en s'élargissant ou en se rétrécissant au sein d'une même ligne. Les caractéristiques intrinsèques de chaque ligne telles que sa largeur, sa longueur, sa forme générale peuvent varier d'une ligne à l'autre.

De préférence, les réseaux en reliefs sont formés par la technique d'impression taille-douce avec ou sans encre. L'impression taille-douce sans encre est également désignée couramment par technique du timbre sec. Le timbre sec peut être réalisé par exemple sur un support du document-valeur après application préalable d'une première couche d'encre. Le réseau en relief est ensuite embossé au moins partiellement sur cette première couche d'encre.

L'encre est par exemple choisie et sans que cela ne soit limitatif parmi une encre à effet optique iridescent, une encre à effet optique variable (type OVI), une encre à effet optique variable magnétique (type OVMI) et une encre à cristaux liquides. L'encre peut être également une encre invisible à la lumière blanche et visible sous un rayonnement ultra-violet et/ou infrarouge.

Dans ce cas, les effets optiques changeant produit par le relief géométrique de chaque ligne du réseau se conjuguent avantageusement avec les propriétés optiques de l'encre pour conduire à un élément de sécurité de premier niveau complexe et difficile à reproduire.

De préférence, la variation de l'angle d'inclinaison est périodique ou pseudopériodique. Cette périodicité des variations angulaires des flancs des lignes permet de créer un effet optique qui se propage de proche en proche lors de l'inclinaison de l'élément de sécurité.

Dans ce cas, la variation de l'angle d'inclinaison peut être modulée spatialement en fréquence de manière à coder ou incorporer une information dans la ligne et/ou dans le réseau. Ainsi, dans ce cas, il est possible de faire apparaître des caractères, des dessins complexes en modulant des portions de lignes du réseau avec de hautes fréquences par rapport au reste du réseau.

Par exemple, la variation périodique ou pseudopériodique de l'angle d'inclinaison est sinusoïdale ou hélicoïdale au moins sur une partie de la ligne.

Par ailleurs, l'angle d'inclinaison du flanc peut varier par pas prédéfini le long de la ligne. Eventuellement, le pas prédéfini peut être variable.

De préférence, chaque ligne comprend un autre flanc dans laquelle les deux flancs se rejoignent en une arête longitudinale de la ligne et l'angle d'inclinaison de l'autre flanc varie graduellement le long de la ligne. Ainsi, dans ce cas, les sillons formés par les flancs en vis-à-vis de deux lignes contigües du réseau peuvent avoir une profondeur constante.

Par ailleurs, il est possible de créer un effet optique symétrique en faisant varier les angles de façon symétrique (effet miroir) sur les deux flancs en vis-à-vis de deux lignes contigües et/ou sur les deux flancs d'une même ligne.

De préférence, les lignes du réseau sont contigües. Le fait de resserrer les lignes entre elles permet d'amplifier l'effet optique dégradé.

L'élément peut comprendre au moins des première et deuxième lignes contigües dans lesquelles les variations de l'inclinaison des flancs des deux lignes de même orientation sont décalées l'une par rapport à l'autre le long des lignes.

Dans ce cas, de façon avantageuse, ce décalage des variations d'une ligne à l'autre crée un effet de propagation de proche en proche du motif formé par le réseau lors d'une inclinaison appliquée de façon volontaire à l'élément de sécurité.

De préférence, la largeur d'une ligne est comprise entre 10 micromètres et 2 millimètres, de préférence entre 100 micromètres et 1 millimètre. La ligne a de préférence une hauteur comprise entre 0 et 200 micromètres, de préférence environ égale à 100 micromètres. La période de la variation est par exemple supérieure à 0.1 millimètre, de préférence comprise entre 0.5 et 20 millimètres.

De préférence, le réseau est recouvert d'un vernis protecteur de manière à le protéger notamment des agressions de son environnement extérieur.

Le réseau peut en outre est réalisé au moins partiellement sur une structure diffractive telle qu'un patch ou une bande holographique.

En outre, le ou les flancs peuvent avoir une section transversale ayant une forme générale curviligne concave ou convexe ou une forme générale rectiligne avec au moins une rupture d'incidence concave ou convexe. Ceci permet notamment d'augmenter encore la complexité des effets optiques.

Un élément de sécurité selon l'invention peut en outre comporter l'une ou plusieurs des caractéristiques selon lesquelles :
- chaque ligne comprend un autre flanc, les deux flancs se rejoignant en une arête longitudinale de la ligne, l'angle d'inclinaison de l'autre flanc est constant le long de la ligne ;
- les deux flancs en vis-à-vis de deux lignes contigües du réseau se rejoignent en formant un sillon de profondeur constante le long des lignes ;
- les deux flancs en vis-à-vis de deux lignes contigües se rejoignent en formant un sillon de profondeur variable le long des lignes, un des flancs ayant un angle d'inclinaison constant le long de sa ligne, par exemple nul.

L'invention a encore pour objet une plaque pour une impression taille-douce, **caractérisée en ce qu'**elle comprend une zone apte à créer par impression sur un support un élément de sécurité selon l'invention, la zone comprenant au moins un sillon gravé de forme complémentaire à celle d'une ligne du réseau de l'élément.

Une plaque selon l'invention peut comprendre l'une ou plusieurs des caractéristiques selon lesquelles :
- le sillon a un profil en gradin ;
- le profil en gradin présente des marches individuelles ayant une taille inférieure ou égale à cinq microns.

L'invention a encore pour objet un procédé de fabrication d'une plaque pour une impression taille-douce selon l'invention, **caractérisé en ce qu'**il comprend une étape de gravure de la plaque par un outil de gravure piloté par un ordinateur selon un programme définissant la variation de l'angle d'inclinaison du flanc de chaque ligne du réseau.

Un procédé selon l'invention peut comprendre la caractéristique selon laquelle l'outil de gravure est un outil de gravure au laser ou un outil de fraisage mécanique de précision.

L'invention a également pour objet un document-valeur portant un élément de sécurité selon l'invention.

D'autres caractéristiques et avantages de l'invention apparaîtront à la lumière de la description qui suit, faite en référence aux dessins annexés dans lesquels :
- la figure 1 représente un document-valeur tel qu'un billet de banque comprenant un élément de sécurité selon un premier mode de réalisation de l'invention ;
- les figures 2 et 3 représentent un réseau de lignes de l'élément de sécurité de la figure 1 selon deux angles d'observation respectivement θ1 et θ2 ;
- la figure 4 représente une vue en perspective de trois lignes contigües du réseau des figures 2 et 3 ;
- les figures 5 et 6 représentent l'évolution longitudinale de la hauteur d'une arête longitudinale d'une des lignes du réseau de la figure 4 le long de laquelle la variation de l'angle d'un de ses flancs est respectivement sinusoïdale et triangulaire et les figures 5A, 5B et 6A, 6B représentent des vues en coupe transversale selon les lignes A-A et B-B respectivement des figures 5 et 6 ;
- la figure 7 représente une vue en perspective de trois lignes contiguës d'un réseau selon une première variante du premier mode de réalisation dans laquelle les angles d'inclinaison des flancs en vis-à-vis de deux lignes contigües varient ;
- les figure 8 et 9 représentent l'évolution longitudinale du trajet d'un sillon formé par la jonction des flancs en vis-à-vis de deux lignes contiguës de la figure 7 le long desquelles la variation de l'angle est respectivement sinusoïdale et triangulaire et les figures 8A, 8B et 9A, 9B représentent des vues en coupe transversale selon les lignes A-A et B-B respectivement des figures 8 et 9 ;
- la figure 10 représente une carte en relief d'une plaque gravée en nuances de gris ;
- la figure 11 représente un tableau de correspondance d'une nuance de gris et d'une profondeur de gravure de la carte de la figure 10 ;
- les figures 12A à 12D représentent une évolution de la profondeur d'un sillon dans une plaque gravée selon des indications de la carte de la figure 10 ;
- la figure 13 représente une vue à échelle agrandie de la partie cerclée de la figure 12D ;
- la figure 14 est une vue en perspective d'une plaque de gravure d'un élément de sécurité selon les figures 1 à 4 ;
- la figure 15 représente l'évolution du trajet de plusieurs sillons formés par les flancs en vis-à-vis de plusieurs lignes contigües d'un réseau le long desquelles la variation de l'angle est triangulaire selon une deuxième variante du premier mode de réalisation ;
- les figures 16A à 16F représentent des vues en coupe transversale d'un flanc d'une ligne du réseau de la figure 1 selon différentes possibilités.

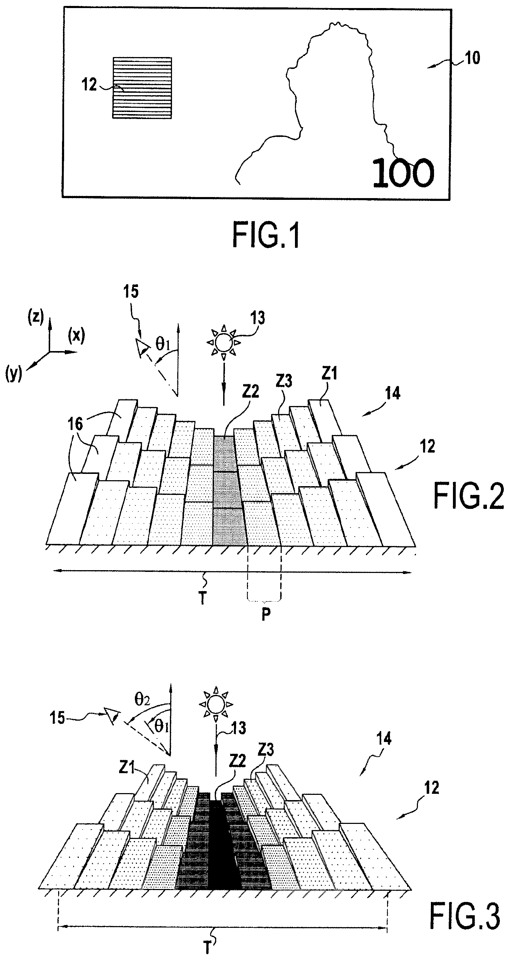

On a représenté sur **la** **figure 1** un document-valeur selon un premier mode de réalisation de l'invention. Ce document-valeur est désigné par la référence générale 10. Ce document-valeur 10 est, dans l'exemple décrit, un billet de banque.

Comme cela est illustré sur **la** **figure 1**, ce billet de banque 10 comprend dans son coin supérieur gauche un élément de sécurité 12 selon l'invention.

L'élément de sécurité 12 comprend un réseau 14 de lignes 16 en relief. Chaque ligne 16 comprend au moins un flanc 18 définissant un angle d'inclinaison α1 par rapport à une direction normale au plan du réseau 14 (cette direction est schématisée par un axe Z du repère cartésien [X, Y, Z] indiqué sur les figures).

Dans l'exemple illustré sur **les** **figures 1 à 4**, chaque ligne 16 a une forme générale rectiligne et les lignes 16 du réseau 14 sont sensiblement parallèles entre elles. Bien entendu, dans une variante non illustrée sur les figures, le réseau peut comprendre une seule ligne par exemple en forme de spirale. Dans ce cas, le réseau est formé par la pluralité de tours de la spirale.

Plus particulièrement, l'angle d'inclinaison α1 du flanc 18 d'au moins une ligne 16 du réseau 14 varie graduellement le long de cette ligne 16 de manière à former en réflexion lumineuse un effet optique dégradé changeant en fonction d'un angle d'observation θ de l'élément de sécurité 12.

On a représenté sur **les** **figures 2 et 3**, en observation oblique, un réseau 14 de lignes parallèles contigües 16 éclairées par un faisceau lumineux perpendiculaire au réseau 14. Une source lumineuse 13 générant le faisceau lumineux est représentée schématiquement au-dessus de l'élément de sécurité 12. Par ailleurs, un oeil 15 d'un observateur humain est représenté schématiquement à gauche de chacune des **figures 2 et 3**. L'angle d'observation θ par rapport à la normale varie de l'une des figures à l'autre d'une valeur θ1 (**figure 2**) à θ2 (**figure 3**), où θ2□ est supérieur à θ1.

Ainsi, on voit sur ces figures, que la réflexion de la lumière sur le réseau 14 forme un effet optique dégradé illustré de façon schématique par une variation d'une densité de points. Cet effet optique dégradé est déterminé par la variation de l'angle d'inclinaison α1 des flancs 18 des lignes 16 du réseau 14.

Dans cet exemple illustré, l'angle d'inclinaison α1 du flanc 18 de chaque ligne 16 varie, de façon sinusoïdale d'une valeur minimale proche de 70° dans des zones d'extrémités Z1 de chaque ligne 16 à une valeur maximale dans une zone médiane Z2 de chaque ligne 16, proche de 90°, en passant par une zone intermédiaire Z3. Sur ces figures, les angles n'ont pas été représentés à l'échelle pour des raisons de clarté.

Pour une inclinaison proche de 90°, un faisceau lumineux sensiblement parallèle à la direction normale Z est réfléchi de façon spéculaire dans cette direction alors que pour une inclinaison proche de 45°, le faisceau est réfléchi de façon spéculaire sensiblement à angle droit.

L'oeil 15 d'un utilisateur observant l'élément de sécurité 12 selon un angle d'orientation θ1 sensiblement égal à 30° par rapport à la normale, observe ainsi des zones claires (notamment Z1) correspondant à des zones du réseau 14 inclinées à 75°, des zones foncées (notamment Z2) correspondant à des zones du réseau inclinées à 90° et des zones intermédiaires (notamment Z3) correspondant à des zones du réseau 14 inclinées entre 75° et 90°.

Ainsi, selon l'inclinaison des flancs 18 de chaque ligne 16, la lumière est réfléchie dans différentes directions et non dans une unique direction privilégiée, ce qui crée un effet optique dégradé pour l'observateur.

Par ailleurs, cette répartition lumineuse varie en fonction de l'angle d'observation θ de l'utilisateur. Ainsi, cet effet optique dégradé change lorsque l'angle d'observation varie de θ1 (**figure 2**) à θ2 (**figure 3**) et confère un effet dynamique lié à cette variation de répartition lumineuse en réflexion.

Dans cet exemple, l'angle d'inclinaison α1 varie par pas P prédéfini le long de la ligne 16. De préférence, le pas prédéfini P est constant et a une valeur supérieure à trois microns. Eventuellement, en variante, le pas prédéfini est variable.

Par ailleurs, de préférence, l'angle d'inclinaison α1 du flanc 18 de la ligne 16 varie de manière périodique ou pseudopériodique. Dans cet exemple, la variation de l'angle d'inclinaison est sinusoïdale (**figures 2 et 3**).

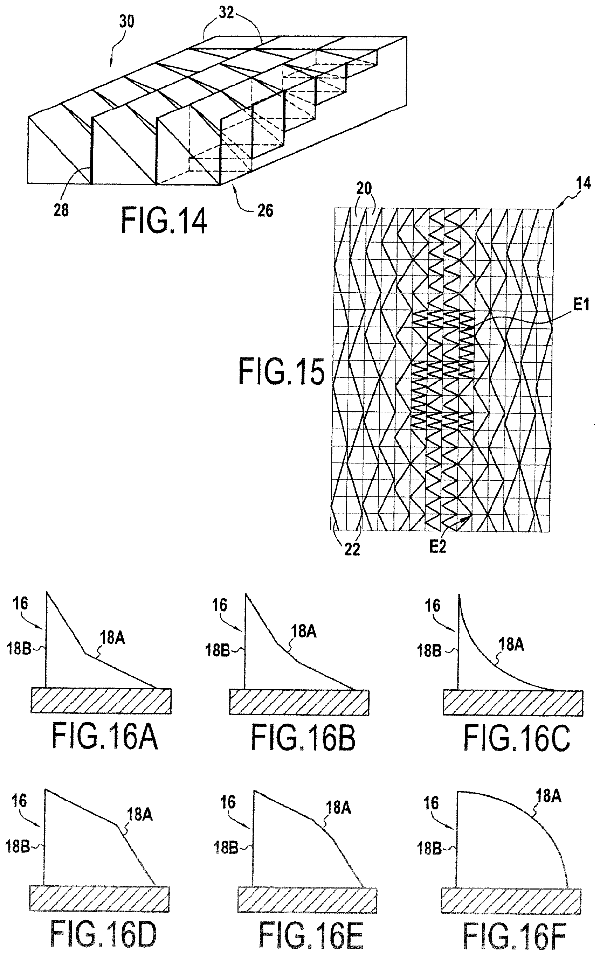

Dans une deuxième variante du premier mode de réalisation illustrée sur **la** **figure 15**, la variation de l'angle peut être modulée spatialement en fréquence de manière à faire apparaître une information dans le réseau 14. Une telle modulation fréquentielle permet d'insérer dans le réseau 14 un motif modulé en haute fréquence sur un fond modulé en basse fréquence. Ce motif peut être alphanumérique.

Ainsi, on voit sur cette figure que les sillons 22 suivent un trajet triangulaire comprenant des portions à hautes fréquences et des portions à basse fréquence. La zone E1 comprenant les portions à haute fréquence délimite dans cet exemple illustré le chiffre deux et la zone E2 comprend des portions à moyenne et basse fréquences. Bien entendu, la zone E2 peut comprendre une seule fréquence de modulation spatiale et non plusieurs comme illustré sur **la** **figure 15**.

De préférence, la période T de la variation est supérieure à 0.1 millimètres, de préférence comprise entre 0.5 et vingt millimètres. Par exemple, le pas P correspond à un dixième de la période T.

De préférence, la largeur L d'une ligne 16 est comprise entre 10 micromètres et 2 millimètres, de préférence entre 100 micromètres et 1 millimètre. Toutefois, bien que cela ne soit pas visible sur les figures, la largeur peut également varier le long de chaque ligne 16. Par ailleurs, la ligne 16 a par exemple une hauteur H comprise entre 0 et 200 micromètres, de préférence égale à 100 micromètres.

Les différents paramètres peuvent être optimisés par exemple en réalisant de simples essais d'impression jusqu'à atteindre l'effet voulu.

De préférence, chaque ligne 16 comprend un autre flanc 18B agencé de manière à ce que les deux flancs 18A et 18B de la ligne 16 se rejoignent en une arête longitudinale 20 de la ligne 16. En outre, les deux flancs 18A et 18B en vis-à-vis de deux lignes contigües 16 se rejoignent en formant un sillon 22.

Dans l'exemple illustré sur **les** **figures 1 à 4**, l'autre des flancs 18B a un angle d'inclinaison α2 constant le long de la ligne 16. Plus précisément, dans cet exemple, cet angle d'inclinaison α2 est un angle nul par rapport à la direction Z et la variation de l'angle d'inclinaison α1 est sinusoïdale.

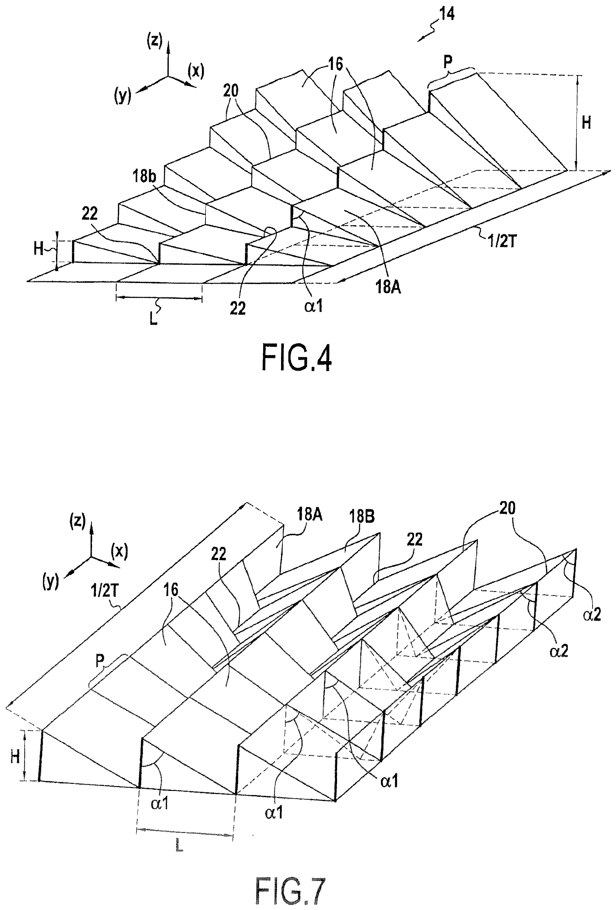

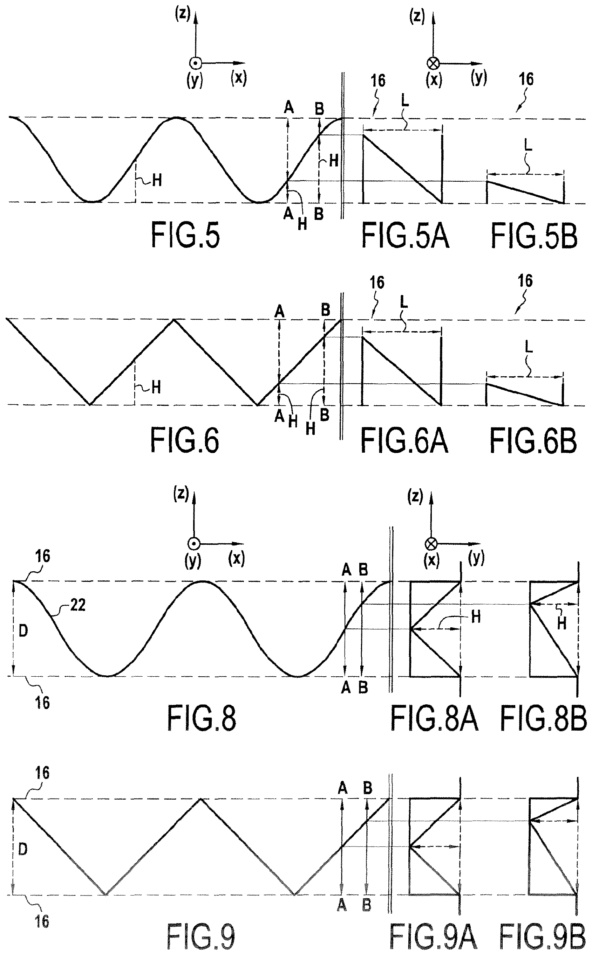

Dans ce cas, l'arête 20 de la ligne 16 a une hauteur variable selon la direction longitudinale des lignes 16 comme cela est illustré sur **les** **figures 5, 5A et 5B**. Sur cette figure, on a représenté l'évolution de la hauteur de l'arête 20 le long d'une des lignes 16 du réseau 14 de **la** **figure 4**. La variation de la hauteur H de l'arête 20 suit celle de l'angle α1 le long de la ligne 16 et est donc sinusoïdale. Par ailleurs, dans ce cas, le sillon 22 a une profondeur constante selon la direction longitudinale des lignes 16. Eventuellement, le sillon 22 a une profondeur variable le long des lignes 16.

Dans une première variante illustrée par **les** **figures 6, 6A et 6B**, la variation de la hauteur H de l'arête 20 est triangulaire.

Dans une deuxième variante illustrée sur **la** **figure 7**, l'angle d'inclinaison de l'autre flanc 18B de la ligne 16 varie graduellement le long de la ligne 16. Par exemple, les deux flancs 18A, 18B en vis-à-vis de deux lignes contigües 16 du réseau 14 se rejoignent en formant un sillon 22 de profondeur constante le long des lignes 16. La variation des angles d'inclinaison α1 suit alors un profil hélicoïdal au moins sur une partie.

Dans ce cas, le sillon 22 a une profondeur constante selon la direction longitudinale des lignes 16 comme cela est illustré sur **les** **figures 8, 8A et 8B****.**

Ainsi, sur ces figures, on a représenté deux demi-lignes 16 contigües séparées d'une distance D, égale à la largeur L d'une ligne vue de dessus. On voit que le trajet du sillon 22 le long des lignes a une forme générale sinusoïdale. En revanche, comme cela est visible en coupe transversale, la profondeur du sillon est constante le long des lignes 16. Eventuellement, le trajet du sillon peut être de forme générale triangulaire conformément à l'illustration **des** **figures 9, 9A et 9B**.

Eventuellement, dans des variantes non illustrées, une ou plusieurs lignes 16 du réseau 14 peut avoir une forme générale curviligne, circulaire, en zigzag ou en spirale.

Dans l'exemple décrit, les flancs 18A, 18B ont une section transversale rectiligne. Toutefois, il est possible de prévoir des flancs ayant des sections transversales de formes géométriques diverses et variées afin d'enrichir encore les effets optiques produits par le réseau 14.

Ainsi, on a représenté sur **les** **figures 16A à 16F**, différentes formes envisageables des sections transversales des flancs. Par l'exemple, la section transversale comprend une ou deux ruptures d'incidence convexe (**figures 16D, 16E**) ou concave (**figures 16A, 16B**) ou une forme curviligne concave (**figure 16C**) ou convexe (**figure 16F**) voire parabolique ou circulaire. Dans ce cas, l'angle d'inclinaison du flanc 18 est défini comme étant un angle d'inclinaison moyen.

Par exemple, les variations de l'inclinaison des flancs 18A, 18B de même orientation de deux lignes contigües 16 sont décalées l'une par rapport à l'autre le long des lignes 16.

La formation d'un tel élément de sécurité 12 selon l'un ou l'autre des modes de réalisation est par exemple réalisée par impression taille-douce ou par embossage sur un support adapté, au moyen d'une plaque gravée.

Par exemple, l'élément de sécurité 12 est réalisé par impression taille-douce sans encre, désignée également par technique du timbre sec.

Afin d'enrichir les effets visuels de cette sécurité, ce timbre sec sera formé préférentiellement sur une première couche d'encre à effet optique variable, réalisée au préalable. Eventuellement, une autre couche d'encre à effet optique variable peut être appliquée après formation du timbre sec.

Par exemple, l'encre est choisie parmi une encre à effet optique iridescent, une encre optiquement variable, une encre à effet optique variable magnétique et une encre à cristaux liquides et le réseau 14 est recouvert de cette encre. Eventuellement, l'encre peut être une encre invisible à la lumière blanche et visible sous un rayonnement ultra-violet ou infrarouge.

L'ajout d'une encre permet de créer un effet optique supplémentaire venant se conjuguer à l'effet optique dégradé produit par le relief géométrique du réseau 14. Ces encres, connues en soi dans l'état de la technique, comprennent par exemple des pigments à effet optique variable et changent de couleur en fonction de l'angle d'observation. L'encre optiquement variable magnétique comprend en outre des pigments orientables dans un champ magnétique.

L'encre comprend par exemple en plus des pigments et des solvants, des matériaux polymérisables destinés à être déposés sur le document-valeur 10 en utilisant un procédé d'impression permettant le transfert d'une couche d'encre épaisse tel que la sérigraphie, la flexographie et l'héliogravure.

Dans une autre variante, le réseau 14 est embossé en timbre sec sur un support réalisé en papier nu ou en plastique (polymère). L'embossage est réalisé à froid ou à chaud (sous presse). Après cette étape d'embossage, une autre étape d'impression consiste à recouvrir totalement ou partiellement le réseau 14 d'une encre. Dans ce cas, l'encre utilisée dans cette autre étape d'impression pourra présenter ou non des effets optiques variables.

Le réseau 14 peut être au moins partiellement réalisé sur une structure diffractive tel qu'un patch ou une bande holographique par exemple.

A des fins de protection de l'élément de sécurité 14 contre des éventuelles dégradations mécaniques et/ou physico-chimiques, un vernis de surimpression peut être appliqué par exemple selon une des techniques d'impression choisie parmi l'offset, la sérigraphie, la flexographie et l'héliogravure.

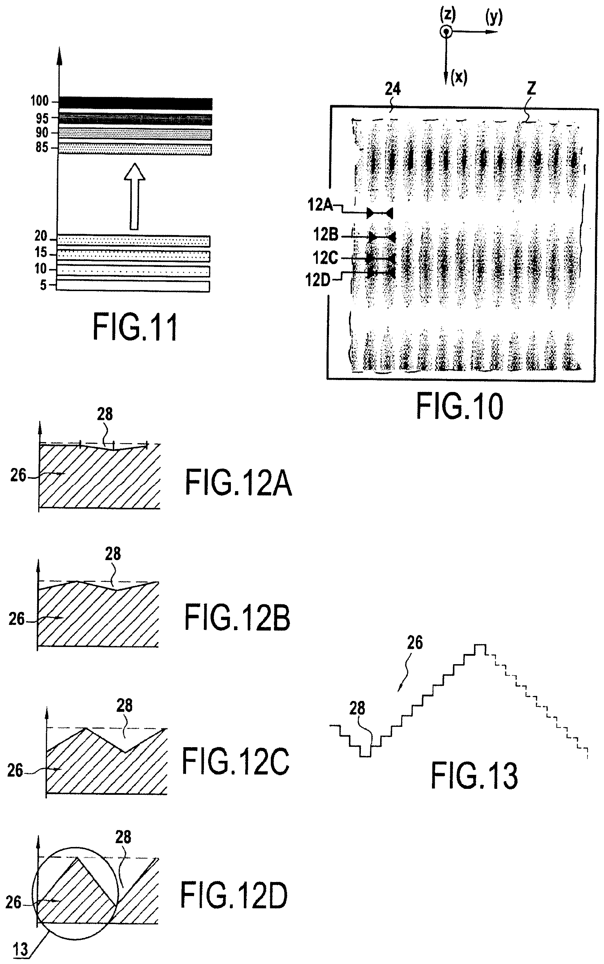

**La** **figure 10** représente une carte 24 du relief en nuances de gris d'une plaque gravée 26 permettant la réalisation de l'élément de sécurité 12 tel qu'illustré sur **les** **figures 1 à 4**. Ainsi, à chaque nuance de gris de cette carte 26, correspond une profondeur de gravure dans la plaque 26. Comme cela est indiqué par le tableau de correspondance de **la** **figure 11**, l'échelle de profondeur de gravure de la plaque 26 varie de 5 microns à 100 microns.

La plaque gravée 26 est représentée en coupe transversale sur **la** **figure 14**. Cette plaque 26 comprend un réseau 30 de sillons 28 en creux de forme générale complémentaire au réseau 14 de lignes 16 en relief de l'élément de sécurité 12. Ainsi, le réseau de la plaque gravée 26 a un relief inversé à celui du réseau 14 de l'élément de sécurité 12. Autrement dit, une ligne 32 en relief du réseau 30 de la plaque 26 forme par impression un sillon 22 du réseau 14 de l'élément de sécurité imprimé 12 et un sillon 28 du réseau 30 de la plaque 26 forme une ligne 16 en relief du réseau 14.

**Les** **figures 12A à 12D** illustrent l'évolution de la profondeur d'un sillon 28 de la plaque 26 une fois gravée conformément à la carte 24, en des positions repérées sur la carte 24 par les références 12A, 12B, 12C et 12D. On voit ainsi que la variation de la profondeur du sillon 28 est graduelle.

On va maintenant décrire les principales étapes d'un procédé de fabrication de la plaque de gravure 26 de **la** **figure 14**. Le procédé comprend une étape de gravure de la plaque 26 par un outil de gravure piloté par un ordinateur selon un programme définissant la variation de l'angle d'inclinaison du flanc de chaque sillon 28 du réseau 30 de la plaque 26 conformément aux indications fournies par la carte 24.

La plaque non gravée 26 est ainsi soumise à un programme de gravure avec cet outil de gravure piloté par un ordinateur. L'étape de gravure est réalisée en fonction des données de profondeur de la carte 24 de la profondeur. De préférence, l'outil de gravure est un outil de gravure au laser. En variante, l'outil est un outil de fraisage mécanique de précision.

La gravure numérique est maîtrisée dans les trois dimensions de l'espace ce qui permet de contrôler aisément la pente des flancs avec une résolution inférieure ou égale à 5 microns.

Ainsi, le sillon 28 a un profil de préférence en gradin présentant des marches individuelles ayant une taille inférieure ou égale à cinq microns, comme cela est représenté sur **la** **figure 13**.

L'invention tire profit du fait que grâce à un tel procédé de gravure, il est possible d'ajuster avec précision l'inclinaison des talus ou flancs des sillons 28 du réseau 30 de la plaque 26.

On va maintenant décrire les principaux aspects d'un élément de sécurité 12 selon l'invention.

Un observateur souhaite authentifier le document-valeur, c'est-à-dire le billet de banque 10. Pour cela, il provoque des mouvements de faibles amplitudes autour de la direction normale Z du billet de banque 10 de manière à observer un effet optique dégradé changeant. Selon le motif de variation de l'angle du flanc de chaque ligne, des vagues, des effets de moiré apparaissent et se propagent de proche en proche avec les mouvements provoqués par l'observateur et ce même pour des angles d'observation proches de la normale au document-valeur 10.

Cette impression de propagation de proche en proche du motif est notamment obtenue grâce à la périodicité du motif en relief géométrique formé sur le réseau 14.

L'observateur authentifie alors rapidement le document-valeur.

Bien que l'invention ait été décrite par des exemples en référence aux figures d'accompagnement, il est entendu que de nombreuses modifications peuvent venir à l'esprit de l'homme du métier sans pour autant sortir de la portée de la présente invention.

Ainsi, les paramètres géométriques des lignes du réseau tels que notamment la largeur, la longueur, la forme des lignes peuvent changer d'une ligne à l'autre du réseau, au sein d'une même ligne sans que cela ne sorte du cadre défini par la portée des revendications.

## Revendications

1. Elément (12) de sécurité pour un document-valeur (10), comprenant un réseau (14) de lignes (16) en relief, chaque ligne (16) comprenant au moins un flanc (18, 18A) définissant chacun un angle d'inclinaison (α1) par rapport à une direction normale (Z) au réseau (14), **caractérisé en ce que** l'angle d'inclinaison (α1) du flanc (18, 18A) d'au moins une ligne (16) du réseau (14) varie graduellement le long de cette ligne (16) de manière à former en réflexion lumineuse un effet optique dégradé changeant en fonction d'un angle d'observation (θ, θ1, θ2) de l'élément de sécurité (12).

2. Elément (12) selon la revendication 1, dans lequel la ou les lignes (16) a une forme générale rectiligne, en zigzag, circulaire, curviligne ou en spirale sur au moins une partie.

3. Elément (12) selon l'une des revendications 1 ou 2, dans lequel chaque ligne (16) comprend un autre flanc (18, 18B), les deux flancs (18A, 18B) de chaque ligne (16) se rejoignant en une arête longitudinale (20) de la ligne (16), l'angle d'inclinaison (α2) de l'autre flanc (18, 18B) est sensiblement constant le long de la ligne (16).

4. Elément (12) selon l'une quelconque des revendications 1 ou 2, dans lequel chaque ligne (16) comprend un autre flanc (18, 18B), les deux flancs (18A, 18B) de chaque ligne (16) se rejoignant en une arête longitudinale (20), l'angle d'inclinaison (α2) de l'autre flanc (18, 18B) varie graduellement le long de la ligne (16).

5. Elément (12) selon l'une quelconque des revendications précédentes, dans lequel les lignes (16) du réseau (14) sont contigües.

6. Elément (12) selon la revendication précédente, dans lequel les deux flancs (18A, 18B) en vis-à-vis de deux lignes contigües (16) du réseau (14) se rejoignent en formant un sillon (22) de profondeur constante le long des lignes.

7. Elément (12) selon la revendication 5, dans lequel les deux flancs (18A, 18B) en vis-à-vis de deux lignes contigües (16) se rejoignent en formant un sillon (22) de profondeur variable le long des lignes (16), un des flancs ayant un angle d'inclinaison constant le long de sa ligne, par exemple nul.

8. Elément (12) selon l'une quelconque des revendications précédentes, dans lequel la variation de l'angle d'inclinaison (α) est périodique ou pseudopériodique de période T.

9. Elément (12) selon la revendication précédente, dans lequel la variation de l'angle d'inclinaison (α1,α2) d'un des flancs (18A, 18B) de la ou des lignes (16) du réseau (14) est modulée spatialement en fréquence le long de la ou des lignes (16) de manière à coder une information dans le réseau (14).

10. Elément (12) selon la revendication 7 ou 8, dans lequel la variation de l'angle d'inclinaison (α1,α2) est sinusoïdale ou hélicoïdale sur au moins une partie de la ligne (16).

11. Elément (12) selon la revendication 8 ou 9, ou selon la revendication 10 prise en combinaison avec la revendication 8, dans lequel la période (T) de la variation est supérieure à 0.1 millimètre, de préférence comprise entre 0.5 et 20 millimètres.

12. Elément (12) selon l'une quelconque des revendications précédentes, comprenant au moins des première et deuxième lignes contigües (16), les variations de l'inclinaison des flancs des deux lignes de même orientation sont décalées l'une par rapport à l'autre le long des lignes.

13. Elément (12) selon l'une quelconque des revendications précédentes, dans lequel l'angle d'inclinaison (α1,α2) du flanc (18) varie par pas prédéfini (P) le long de la ligne (16).

14. Elément (12) selon la revendication précédente, dans lequel le pas prédéfini (P) est variable.

15. Elément (12) selon l'une quelconque des revendications précédentes, dans lequel la largeur (L) d'une ligne (16) est comprise entre 10 micromètres et 2 millimètres, de préférence entre 100 micromètres et 1 millimètre.

16. Elément (12) selon l'une quelconque des revendications précédentes, dans lequel la ligne (16) a une hauteur (H) comprise entre 0 et 200 micromètres, de préférence égale à 100 micromètres.

17. Elément (12) selon l'une quelconque des revendications précédentes, dans lequel le réseau (14) est formé par embossage sur une couche d'encre ou est recouvert par une couche d'encre, l'encre étant choisie parmi une encre à effet optique iridescent, une encre à effet optique variable, une encre à effet optique variable magnétique , une encre à cristaux liquides et une encre invisible à la lumière blanche et visible sous un rayonnement ultra-violet et/ou infrarouge.

18. Elément (12) selon l'une quelconque des revendications précédentes, dans lequel le réseau est recouvert d'un vernis protecteur.

19. Elément (12) selon l'une quelconque des revendications précédentes, dans lequel le réseau est réalisé au moins partiellement sur une structure diffractive telle qu'un patch ou une bande holographique.

20. Elément (12) selon l'une quelconque des revendications précédentes, dans lequel le ou les flancs ont une section transversale ayant une forme générale curviligne concave ou convexe ou rectiligne avec au moins une rupture d'incidence convexe ou concave.

21. Plaque (26) pour une impression taille-douce, **caractérisée en ce qu'**elle comprend une zone apte à créer par impression sur un support un élément de sécurité (12) selon l'une quelconque des revendications précédentes, la zone comprenant au moins un sillon (28) gravé de forme complémentaire à celle d'une ligne (16) du réseau de l'élément (12).

22. Plaque (26) selon la revendication précédente, dans lequel le sillon (28) a un profil en gradin.

23. Plaque (26) selon la revendication précédente, dans lequel le profil en gradin présente des marches individuelles ayant une taille inférieure ou égale à cinq microns.

24. Procédé de fabrication d'une plaque (26) pour une impression taille-douce selon l'une quelconque des revendications 21 à 23, **caractérisé en ce qu'**il comprend une étape de gravure de la plaque (26) par un outil de gravure piloté par un ordinateur selon un programme définissant la variation de l'angle d'inclinaison (α1,α2) du flanc (18A, 18B) de chaque ligne (16) du réseau (14).

25. Procédé selon la revendication précédente, dans lequel l'outil de gravure est un outil de gravure au laser ou un outil de fraisage mécanique de précision.

26. Document-valeur, **caractérisé en ce qu'**il porte un élément de sécurité (12) selon l'une quelconque des revendications 1 à 20.

## Patentansprüche

1. Sicherheitselement (12) für Wertdokument (10), umfassend ein Netzwerk (14) aus Linien (16) im Relief, wobei jede Linie (16) mindestens eine Flanke (18, 18A) umfasst, die jeweils einen Neigungswinkel (α1) im Verhältnis zu einer normalen Richtung (Z) im Netzwerk (14) definiert, **dadurch gekennzeichnet, dass** der Neigungswinkel (α1) der Flanke (18, 18A) mindestens einer Linie (16) des Netzwerks (14) entlang dieser Linie (16) derart graduell schwankt, dass in Lichtreflexion ein abgestufter optischer Effekt entsteht, der in Abhängigkeit von einem Beobachtungswinkel (θ, θ1, θ2) des Sicherheitselements (12) schwankt.

2. Element (12) nach Anspruch 1, wobei die Linie(n) (16) über mindestens einen Teil eine allgemein gerade, Zickzack-, kreisförmige, gekrümmte oder spiralige Form hat/haben.

3. Element (12) nach einem der Ansprüche 1 oder 2, wobei jede Linie (16) eine andere Flanke (18, 18B) umfasst, wobei sich die zwei Flanken (18A, 18B) jeder Linie (16) in einer Längskante (20) der Linie (16) treffen, wobei der Neigungswinkel (α2) der anderen Flanke (18, 18B) entlang der Linie (16) etwa konstant ist.

4. Element (12) nach einem der Ansprüche 1 oder 2, wobei jede Linie (16) eine andere Flanke (18, 18B) umfasst, wobei sich die zwei Flanken (18A, 18B) jeder Linie (16) in einer Längskante (20) treffen, wobei der Neigungswinkel (α2) der anderen Flanke (18, 18B) entlang der Linie (16) graduell schwankt.

5. Element (12) nach einem der vorangehenden Ansprüche, wobei die Linien (16) des Netzwerks (14) aneinander angrenzend sind.

6. Element (12) nach vorangehendem Anspruch, wobei sich die zwei Flanken (18A, 18B) gegenüber von zwei aneinander angrenzenden Linien (16) des Netzwerks (14) treffen und dabei eine Furche (22) konstanter Tiefe entlang der Linien bilden.

7. Element (12) nach Anspruch 5, wobei sich die zwei Flanken (18A, 18B) gegenüber von zwei aneinander angrenzenden Linien (16) treffen und dabei eine Furche (22) variabler Tiefe entlang der Linien (16) bilden, wobei eine der Flanken einen konstanten Neigungswinkel entlang ihrer Linie hat, beispielsweise Null.

8. Element (12) nach einem der vorangehenden Ansprüche, wobei die Schwankung des Neigungswinkels (α) periodisch oder pseudoperiodisch mit der Periode T ist.

9. Element (12) nach vorangehendem Anspruch, wobei die Schwankung des Neigungswinkels (α1, α2) einer der Flanken (18A, 18B) der Linie(n) (16) des Netzwerks (14) entlang der Linie(n) (16) derart räumlich in Frequenz moduliert ist, dass im Netzwerk (14) eine Information codiert ist.

10. Element (12) nach Anspruch 7 oder 8, wobei die Schwankung des Neigungswinkels (α1, α2) über mindestens einen Teil der Linie (16) sinus- oder schraubenförmig ist.

11. Element (12) nach Anspruch 8 oder 9 oder nach Anspruch 10 in Kombination mit Anspruch 8, wobei die Periode (T) der Schwankung größer als 0,1 Millimeter, vorzugsweise zwischen 0,5 und 20 Millimeter inklusive, ist.

12. Element (12) nach einem der vorangehenden Ansprüche, das mindestens eine erste und zweite aneinander angrenzende Linie (16) umfasst, wobei die Schwankungen der Neigung der Flanken der zwei Linien derselben Ausrichtung entlang der Linien im Verhältnis zueinander versetzt sind.

13. Element (12) nach einem der vorangehenden Ansprüche, wobei der Neigungswinkel (α1, α2) der Flanke (18) entlang der Linie (16) gemäß vordefiniertem Schritt (P) schwankt.

14. Element (12) nach vorangehendem Anspruch, wobei der vordefinierte Schritt (P) variabel ist.

15. Element (12) nach einem der vorangehenden Ansprüche, wobei die Breite (L) einer Linie (16) zwischen 10 Mikrometer und 2 Millimeter, vorzugsweise zwischen 100 Mikrometer und 1 Millimeter, inklusive ist.

16. Element (12) nach einem der vorangehenden Ansprüche, wobei die Linie (16) eine Höhe (H) zwischen 0 und 200 Mikrometer inklusive, vorzugsweise von gleich 100 Mikrometer, hat.

17. Element (12) nach einem der vorangehenden Ansprüche, wobei das Netzwerk (14) durch Prägen auf einer Farbschicht gebildet wird oder von einer Farbschicht bedeckt ist, wobei die Farbe aus einer Farbe mit irisierendem Optikeffekt, einer Farbe mit variablem Optikeffekt, einer Farbe mit magnetisch variablem Optikeffekt, einer Farbe mit Flüssigkristallen und einer bei weißem Licht unsichtbaren und unter UV- und/oder Infrarotbestrahlung sichtbaren Farbe ausgewählt ist.

18. Element (12) nach einem der vorangehenden Ansprüche, wobei das Netzwerk mit einem Schutzlack bedeckt ist.

19. Element (12) nach einem der vorangehenden Ansprüche, wobei das Netzwerk mindestens teilweise auf einer diffraktiven Struktur wie ein Patch oder ein holografischer Streifen realisiert ist.

20. Element (12) nach einem der vorangehenden Ansprüche, wobei die Flanke(n) einen transversalen Querschnitt mit einer allgemein gekrümmten konkaven oder konvexen Form mit mindestens einer konvexen oder konkaven Einfallsbrechung hat/haben.

21. Platte (26) für einen Tiefdruck, **dadurch gekennzeichnet, dass** sie eine Zone umfasst, die imstande ist, durch Drucken auf einem Untergrund ein Sicherheitselement (12) nach einem der vorangehenden Ansprüche zu schaffen, wobei die Zone mindestens eine gravierte Furche (28) komplementärer Form zu der einer Linie (16) des Netzwerks des Elements (12) umfasst.

22. Platte (26) nach vorangehendem Anspruch, wobei die Furche (28) ein abgestuftes Profil hat.

23. Platte (26) nach vorangehendem Anspruch, wobei das abgestufte Profil individuelle Stufen aufweist, die eine Größe von unter oder gleich fünf Mikron haben.

24. Verfahren zur Herstellung einer Platte (26) für einen Tiefdruck nach einem der Ansprüche 21 bis 23, **dadurch gekennzeichnet, dass** es einen Gravurschritt der Platte (26) mit einem Gravurwerkzeug umfasst, das von einem Rechner gemäß einem Programm gesteuert ist, das die Schwankung des Neigungswinkels (α1, α2) der Flanke (18A, 18B) jeder Linie (16) des Netzwerks (14) definiert.

25. Verfahren nach vorangehendem Anspruch, wobei das Gravurwerkzeug ein Laser-Gravurwerkzeug oder ein mechanisches Präzisions-Fräswerkzeug ist.

26. Wertdokument, **dadurch gekennzeichnet, dass** es ein Sicherheitselement (12) nach einem der Ansprüche 1 bis 20 trägt.

## Claims

1. A security element (12) for a value document (10), comprising an array (14) of lines (16) in relief, each line (16) comprising at least one flank (18, 18A) each defining an angle of inclination (α1) with respect to a direction (Z) normal to the array (14), **characterized in that** the angle of inclination (α1) of the flank (18, 18A) of at least one line (16) of the array (14) varies gradually along this line (16) so as to form in reflected light an optical shading effect that changes according to an angle of observation (θ, θ1, θ2) of the security element (12).

2. An element (12) according to claim 1, wherein the line(s) (16) has a generally rectilinear, zigzag, circular or spiral shape over at least one part.

3. An element (12) according to any one of claims 1 or 2, wherein each line (16) includes another flank (18, 18B), the two flanks (18A, 18B) of each line (16) joining in a longitudinal ridge (20) of the line (16); the angle of inclination (α2) of the other flank (18, 18B) is substantially constant along the line (16).

4. An element (12) according to any one of Claims 1 or 2, wherein each line (16) includes another flank (18, 18B), the two flanks (18A, 18B) of each line (16) joining in a longitudinal ridge (20); the angle of inclination (α2) of the other flank (18, 18B) varies gradually along the line (16).

5. An element (12) according to any one of the foregoing claims, wherein the lines (16) of the array (14) are contiguous.

6. An element (12) according to the foregoing claim, wherein the two facing flanks (18A, 18B) of two contiguous lines (16) of the array (14) join to form a furrow (22) with a depth that is constant along the lines.

7. An element (12) according to Claim 5, wherein the two facing flanks (18A, 18B) of two contiguous lines (16) join to form a furrow (22) with a depth that is variable along the lines (16), of the flanks having a constant angle of inclination along its line, zero for example.

8. An element (12) according to any one of the foregoing claims, wherein the variation of the angle of inclination (α) is periodic or pseudo-periodic, with period T.

9. An element (12) according to the foregoing claim, wherein the variation of the angle of inclination (α1,α2) of one of the flanks (18A, 18B) of the line(s) (16) of the array (14) is spatially modulated in frequency along the line(s) (16) so as to encode information in the array (14).

10. An element (12) according to Claim 7 or 8, wherein the variation of the angle of inclination (α1,α2) is sinusoidal or helical over at least part of the line (16).

11. An element (12) according to Claim 8 or 9, or according to Claim 10 in combination with Claim 8, wherein the period (T) of the variation is greater than 0.1 millimeters, preferably comprised between 0.5 and 20 millimeters.

12. An element (12) according to any one of the foregoing claims, comprising at least first and second contiguous lines (16); the variations of inclination of the flanks of the two lines having the same orientation are offset with respect to one another along the lines.

13. An element (12) according to any one of the foregoing claims, wherein the angle of inclination (α1,α2) of the flank (18) varies by predefined steps (P) along the line (16).

14. An element (12) according to the foregoing claim, wherein the predefined step (P) is variable.

15. An element (12) according to any one of the foregoing claims, wherein the width (L) of a line (16) is comprised between 10 micrometers and 2 millimeters, preferably between 100 micrometers and 1 millimeter.

16. An element (12) according to any one of the foregoing claims, wherein the line (16) has a height (H) comprised between 0 and 200 micrometers, preferably equal to 100 micrometers.

17. An element (12) according to any one of the foregoing claims, wherein the array (14) is formed by embossing on a layer of ink or is covered by a layer of ink, the ink being selected from among an ink with an iridescent optical effect, a variable optical effect ink, a magnetic ink with a variable optical effect, a liquid crystal ink and an ink invisible under white light and visible under ultraviolet and/or infrared radiation.

18. An element (12) according to any one of the foregoing claims, wherein the array is covered with a protective varnish.

19. An element (12) according to any one of the foregoing claims, wherein the array is formed at least partially on a diffractive structure such as a holographic patch or band.

20. An element (12) according to any one of the foregoing claims, wherein the flank(s) has (have) a cross section with a shape that is generally concave or convex curvilinear or rectilinear with at least one convex or concave incidence break.

21. A plate (26) for intaglio printing, **characterized in that** it comprises a zone capable of creating by printing onto a substrate a security element (12) according to any one of the foregoing claims, the zone comprising at least one engraved furrow (28) with a form complementary to that of a line (16) of the array of the element (12).

22. A plate (26) according to the foregoing claim, wherein the furrow (28) has a stepped profile.

23. A plate (26) according to the foregoing claim, wherein the stepped profile has individual steps with a size smaller than or equal to five microns.

24. A method for manufacturing a plate (26) for intaglio printing according to any one of Claims 21 through 23, **characterized in that** it comprises a step consisting of engraving the plate (26) using an engraving tool controlled by a computer according to a program defining the variation of the angle of inclination (α1,α2) of the flank (18A, 18B) of each line (16) of the array (14).

25. A method according to the foregoing claim, wherein the engraving tool is a laser engraving tool or a precision mechanical milling tool.

26. A value document, **characterized in that** it bears a security element (12) according to any one of Claims 1 through 20.
